# EUROPEAN PATENT APPLICATION

(11) **EP 4 794 022 A1**
(43) Date of publication of application: **19.08.2026**
(21) Application number: 26156608.7
(22) Date of filing: 05.02.2026
(51) Int. Cl.: H01M 4/36, H01M 4/58, H01M 4/136, H01M 10/052

(54) **POSITIVE ELECTRODE ACTIVE MATERIAL, ELECTRODE, AND BATTERY**

(30) Priority: 14.02.2025 JP 2025022200
(71) Applicant: Toyota Jidosha Kabushiki Kaisha, Toyota-shi, Aichi-ken 471-8571 (JP)
(72) Inventor: ISHIGAKI, Yuki, Toyota-shi, 471-8571 (JP); KOSAKA, Daichi, Toyota-shi, 471-8571 (JP); MAHARA, Takanori, Toyota-shi, 471-8571 (JP); KINOSHITA, Taku, Toyota-shi, 471-8571 (JP); EGUCHI, Tatsuya, Kariya-shi, Aichi-ken, 448-8671 (JP); KIMIJIMA, Takeshi, Kariya-shi, Aichi-ken, 448-8671 (JP)
(74) Representative: Kuhnen & Wacker Patent- und Rechtsanwaltsbüro PartG mbB

(57) **Abstract**

A positive electrode active material includes a secondary particle (2), wherein: the secondary particle (2) includes a first particle group and a second particle group; each of the first particle group and the second particle group is composed of primary particles (1); the second particle group has a larger average particle diameter than the first particle group; the first particle group and the second particle group are dispersed in each other in the secondary particle (2); the primary particles (1) belonging to the first particle group contain a first olivine-type compound; the primary particles (1) belonging to the second particle group contain a second olivine-type compound; and the second olivine-type compound has a lower Mn compositional ratio than the first olivine-type compound.

## Description

### BACKGROUND OF THE INVENTION

### 1. Field of the Invention

The present disclosure relates to a positive electrode active material, an electrode, and a battery.

### 2. Description of Related Art

Japanese Unexamined Patent Application Publication No. 2021-009838 (JP 2021-009838 A) discloses a granule of manganese-rich lithium manganese iron phosphate particles (average particle diameter 10 nm or more and 80 nm or less) and iron-rich lithium manganese iron phosphate particles (average particle diameter 80 nm or more and 150 nm or less).

### SUMMARY OF THE INVENTION

As positive electrode active materials, olivine-type compounds such as lithium iron phosphate (LFP), lithium manganese phosphate (LMP), and lithium manganese iron phosphate (LMFP) have been studied. For example, it has been proposed that from the viewpoint of energy density and cycle resistance, a secondary particle (also referred to as "granule", "aggregated particle", or the like) is formed from two types of primary particles different from each other in average particle diameter. However, there is room for improvement in battery resistance.

The present disclosure provides a positive electrode active material that reduces battery resistance, an electrode, and a battery.

Hereinbelow, the technical configurations and functions and effects of the present disclosure will be described. It should be noted that action mechanisms include presumptions. The action mechanisms do not limit the technical scope of the present disclosure.

A first aspect of the present disclosure is a positive electrode active material. The positive electrode active material includes a secondary particle. The secondary particle includes a first particle group and a second particle group. Each of the first particle group and the second particle group is composed of primary particles. The second particle group has a larger average particle diameter than the first particle group. In the secondary particle, the first particle group and the second particle group are dispersed in each other. The primary particles belonging to the first particle group contain a first olivine-type compound. The primary particles belonging to the second particle group contain a second olivine-type compound. The second olivine-type compound has a lower Mn compositional ratio than the first olivine-type compound.

Hereinafter, the "primary particles belonging to the first particle group" is also referred to as "small particles". The "primary particles belonging to the second particle group" is also referred to as "large particles".

The olivine-type compound tends to have a high resistance. In order to achieve a resistance suitable for practical use, it is required to reduce the size of the primary particles from a submicron scale to a nanometer scale. Fine primary particles are highly likely to aggregate. Heretofore, it has been proposed that a secondary particle is formed from small particles and large particles prepared separately from each other. However, as described above, primary particles are highly likely to aggregate, and therefore it is considered that primary aggregates formed from the small particles and primary aggregates formed from the large particles further aggregate to form secondary aggregates. Therefore, it is considered that when an electrode is compressed, the small particles are less likely to enter into gaps between the large particles in the primary aggregates formed from the large particles. That is, there is room for improvement in fillability. Further, it is considered that the large particles have a longer intra-primary-particle ion conduction distance than the small particles. When aggregates of the large particles are formed, it is considered that ions are likely to stagnate and therefore tortuosity increases. The "tortuosity" is one of indicators of ion conductivity in an electrode. When the tortuosity is lower, the ion conductivity is considered to be more excellent. A combination of low fillability and large tortuosity may make it impossible to achieve sufficiently low battery resistance.

In the secondary particle according to the present disclosure, the small particles and the large particles are dispersed in each other. Therefore, it is considered that when an electrode is compressed, the primary particles are likely to be densely packed because the small particles enter into gaps between the large particles. Further, since the large particles are dispersed, tortuosity is expected to improve. Further, the large particles have a lower Mn compositional ratio than the small particles. When the Mn compositional ratio is lower, the primary particles can have lower electrical resistance. Since the large particles have a low Mn compositional ratio, tortuosity is expected to further improve. Due to the synergy of these effects, battery resistance is expected to reduce.

The positive electrode active material according to the above aspect may include, for example, the following configuration. In FE-SEM-EDX (Field Emission-Scanning Electron Microscope Energy/Dispersive X-ray Spectroscopy) analysis of the secondary particle, a relationship of "I₂ < I₁" is satisfied. The "I₁" represents a detected intensity of Mn in the primary particle belonging to the first particle group. The "I₂" represents a detected intensity of Mn in the primary particle belonging to the second particle group.

The difference in Mn compositional ratio between the small particles and the large particles may be determined by, for example, FE-SEM/EDX analysis.

The positive electrode active material according to the above aspect may include, for example, the following configuration. The first olivine-type compound has a composition represented by a formula 1 "LiₓMnₐFe₁₋ₐPO₄". The second olivine-type compound has a composition represented by a formula 2 "Li_{y}Mn_{b}Fe_{1-b}PO₄". In the formula 1 and the formula 2, relationships of "0.5 ≤ x ≤ 1.5", "0.00 < a ≤ 1.00", "0.5 ≤ y ≤ 1.5", "0.00 ≤ b < 1.00", and "b < a" are satisfied.

In the formula 1, "a" represents the Mn compositional ratio of the small particles. In the formula 2, "b" represents the Mn compositional ratio of the large particles.

The positive electrode active material according to the above aspect may include, for example, the following configuration. In the formula 1 and the formula 2, relationships of "0.20 ≤ a ≤ 1.00" and "0.00 ≤ b ≤ 0.80" are satisfied.

The positive electrode active material according to the above aspect may include, for example, the following configuration. In the formula 1 and the formula 2, relationships of "0.60 ≤ a ≤ 0.90" and "0.10 ≤ b ≤ 0.50" are satisfied.

The positive electrode active material according to the above aspect may include, for example, the following configuration. In the formula 1 and the formula 2, a relationship of "0.10 ≤ a - b ≤ 0.90" is further satisfied.

The positive electrode active material according to the above aspect may include, for example, the following configuration. A relationship of "1.5≤ d₂/d₁ ≤ 10" is satisfied. The "d₁" represents an average particle diameter of the first particle group. The "d₂" represents an average particle diameter of the second particle group.

When an average particle diameter ratio "d₂/d₁" is 1.5 to 10, battery resistance is expected to reduce.

The positive electrode active material according to the above aspect may include, for example, the following configuration. A relationship of "0.4 ≤ m₁/(m₁ + m₂) ≤ 0.6" is satisfied. The "m₁" represents a total mass of the primary particles belonging to the first particle group. The "m₂" represents a total mass of the primary particles belonging to the second particle group.

The ratio "m₁/(m₁ + m₂)" represents a mass ratio of the small particles to the total mass of the small particles and the large particles. When the mass ratio of the small particles is 0.4 to 0.6, battery resistance is expected to improve.

A second aspect of the present disclosure is an electrode. The electrode includes a positive electrode layer. The positive electrode layer contains the positive electrode active material according to the above aspect.

The positive electrode layer may also be referred to as a "positive electrode active material layer", a "positive electrode mixture layer", or the like. The "electrode" may either be a "monopolar electrode (positive electrode)" or a "bipolar electrode as long as the electrode includes the positive electrode layer.

A third aspect of the present disclosure is a battery. The battery includes the electrode according to the above aspect.

The battery according to the above aspect may include, for example, the following configuration. The battery has a bipolar structure.

The bipolar structure can be formed by stacking bipolar electrodes. It is expected that the bipolar structure improves, for example, output characteristics. However, the bipolar structure may be required to have a thick positive electrode layer. As the thickness of the positive electrode layer increases, the impact of fillability of the positive electrode active material and the tortuosity of the positive electrode layer on battery resistance increases. The positive electrode active material according to the above aspect is considered to be particularly suitable for the bipolar structure.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram of a secondary particle according to a reference mode;
FIG. 2 is a conceptual diagram of a secondary particle according to the present embodiment;
FIG. 3 shows an example of a number-based distribution of particle diameters of primary particles;
FIG. 4 is a schematic flowchart of a method for producing a positive electrode active material according to the present embodiment;
FIG. 5 is a schematic perspective view of a battery according to a present embodiment;
FIG. 6 is a schematic cross-sectional view taken along the line VI- VI in FIG. 5; and
FIG. 7 is a table showing experimental results.

### DETAILED DESCRIPTION OF EMBODIMENTS

### Terms and Phrases

The terms "comprise", "include", "have", and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, "a particle" may refer to a plurality of particles (group of particles), assemblies of particles, or a powder.

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "≤" and "≥", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, ±5%, ±3%, or ±1%. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

For example, dimensional measurement and shape analysis may be performed on various images using image analysis software. For example, image analysis software "ImageJ" may be used.

A "primary particle" refers to a particle apparently having no grain boundary in an SEM image taken by a FE-SEM at a magnification of 20000 times to 100000 times.

A "particle diameter" is measured by image analysis (microscopy). The particle diameter refers to an arithmetic average of the long side (major-axis diameter) and the short side (minor-axis diameter) of minimum bounding rectangle (MBR) of outline of a particle in an SEM image.

An "average particle diameter" refers to the average of particle diameters. The average particle diameter is measured according to the following procedure. The SEM image of secondary particles (powder) is taken by an FE-SEM. The magnification of the image is 20000 times to 100000 times. In the SEM image, 100 primary particles are randomly selected in total from the secondary particles. The particle diameter of each of the primary particles is measured. The arithmetic average of particle diameters of the 100 primary particles is regarded as the average particle diameter of primary particles. Similarly, the arithmetic average of particle diameters of 100 secondary particles is regarded as the average particle diameter of secondary particles.

A state where "small particles and large particles are dispersed in each other" in a secondary particle refers to a state where at least one of the following conditions (1) to (6) is satisfied in the SEM image (20000 times) of secondary particles taken by an FE-SEM.
(1) An aggregate in which five or more large particles are aggregated has not been formed.
(2) When 10 large particles are randomly selected, 10% by number or more of particles adjacent to each of one or more of the large particles are small particles.
(3) When 10 large particles are randomly selected, 30% by number or more of particles adjacent to each of three or more of the large particles are small particles.
(4) When 10 large particles are randomly selected, 30% by number or more of particles adjacent to each of five or more of the large particles are small particles.
(5) When 10 large particles are randomly selected, 50% by number or more of particles adjacent to each of five or more of the large particles are small particles.
(6) When 10 large particles are randomly selected, the total length of grain boundaries between a large particle and a small particle is larger than the total length of grain boundaries between large particles.

The presence of two or more particle groups different from each other in average particle diameter may be determined by a "number-based distribution (number-based frequency distribution)". The number-based distribution is formed according to the following procedure. An SEM image taken by an FE-SEM at a magnification of 20000 times to 100000 times is prepared. In the SEM image, 10 secondary particles are randomly selected. From each of the secondary particles, 100 primary particles are randomly selected. That is, 1000 primary particles are randomly selected in total. The particle diameter of each of the primary particles is measured. A number-based distribution is formed based on the particle diameters of the 1000 primary particles. In the number-based distribution, a peak having a maximum height (highest peak) is determined. A convex region having a height 0.1 times or more of the height of the highest peak is regarded as a peak. The number of peaks may correspond to the number of particle groups. A particle diameter at the peak top of each of the peaks is a "mode diameter". The mode diameter may correspond to the average particle diameter.

The "detected intensity of Mn" is measured by FE-SEM/EDX. In the number-based distribution of primary particles, a first peak and a second peak are determined. The second peak has a larger mode diameter than the first peak. The first peak is considered to be derived from a first particle group. The second peak is considered to be derived from a second particle group. The FWHM (Full Width at Half Maximum) of each of the first peak and the second peak is determined. In an image obtained by observation with an FE-SEM, 100 primary particles having a particle diameter within a range of "mode diameter of first peak ± 0.5FWHM" are randomly selected. The magnification of observation is 50000 times to 200000 times. Each of the primary particles is subjected to point analysis by EDX to measure the detected intensity of Mn. The arithmetic average of detected intensities of Mn of the 100 primary particles is regarded as the detected intensity "I₁" of Mn in the primary particle belonging to the first particle group. Similarly, in an image obtained by observation with an FE-SEM, 100 primary particles having a particle diameter within a range of "mode diameter of second peak ± 0.5FWHM" are randomly selected. Point analysis is performed by EDX around the center of each of the primary particles to measure the detected intensity of Mn. The arithmetic average of detected intensities of Mn of the 100 primary particles is regarded as the detected intensity "I₂" of Mn in the primary particle belonging to the second particle group.

"D50" refers to a particle diameter corresponding to 50% of a cumulative volume in a volume-based cumulative distribution. The volume-based particle size distribution is measured by a laser diffraction particle size distribution measurement device.

The "degree of circularity" is measured in the SEM image of a particle. The degree of circularity is determined by the following calculation formula. The arithmetic average of degrees of circularity of 10 particles is used. $ψ = 4 πS / {L}^{2}$
ψ: Degree of circularity
π: Circle ratio
S: Sectional area of particle (Area of region surrounded by outline of particle)
L: Perimeter of particle (Length of outline of particle)

The chemical composition of a compound can be measured by ICP-AES (Inductively Coupled Plasma Atomic Emission Spectroscopy). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

A stoichiometric composition formula represents a typical example of a compound. A compound may have a non-stoichiometric composition. For example, "Al₂O₃" is not limited to a compound having an amount-of-substance ratio (mole ratio) of "Al/O = 2/3". Unless otherwise specified, "Al₂O₃" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

### Positive Electrode Active Material

A positive electrode active material includes a secondary particle. The positive electrode active material may be an assembly of secondary particles (powder). The D50 of the positive electrode active material may be, for example, 5 µm or more, 10 µm or more, 15 µm or more, or 20 µm or more. The D50 of the positive electrode active material may be, for example, 30 µm or less, 25 µm or less, 20 µm or less, 15 µm or less, or 10 µm or less.

### Secondary Particle

The secondary particle is an aggregate of primary particles. The aggregate of primary particles includes a first particle group and a second particle group. Each of the first particle group and the second particle group is composed of primary particles. The second particle group has a larger average particle diameter than the first particle group. That is, the primary particles belonging to the first particle group are small particles. The primary particles belonging to the second particle group are large particles.

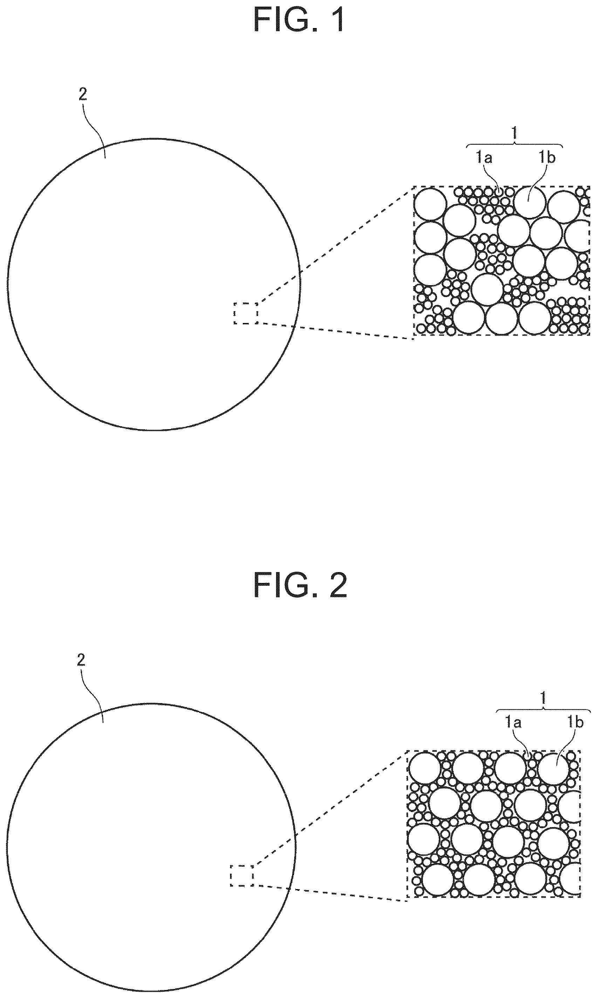

FIG. 1 is a conceptual diagram of a secondary particle according to a reference mode. A secondary particle 2 includes primary particles 1. The primary particles 1 include small particles 1a and large particles 1b. In the reference mode, the small particles 1a and the large particles 1b are not dispersed in the secondary particle 2. The small particles 1a form primary aggregates and the large particles 1b also form primary aggregates. Between the primary aggregates, gaps are formed.

FIG. 2 is a conceptual diagram of a secondary particle according to the present embodiment. In the present embodiment, the small particles 1a and the large particles 1b are dispersed in each other in the secondary particle 2. Therefore, the small particles 1a and the large particles 1b are considered to be densely packed. That is, the present embodiment (FIG. 2) is expected to improve fillability as compared to the reference mode (FIG. 1). Further, since the large particles 1b are dispersed, tortuosity is also expected to improve. Due to the synergy of these effects, battery resistance is expected to reduce.

The state of primary-particle-scale dispersion shown in FIG. 2 may be achieved by, for example, spray-drying a slurry in which the small particles and the large particles are dispersed by a wet bead mill. It should be noted that in the case of a jet mill, grinding is performed by collision between particles to be ground. Therefore, a jet mill tends to be lower in grinding power than a bead mill using beads as grinding media. It is therefore considered that it is difficult for a jet mill to achieve a dispersion state on the scale of primary particles.

In the present embodiment, the secondary particle 2 may have any shape. The secondary particle 2 may be, for example, spherical, rod-like, angular, or blocky. The degree of circularity of the secondary particle 2 may be, for example, 0.50 or more, 0.60 or more, 0.70 or more, 0.80 or more, 0.90 or more, or 0.95 or more. The degree of circularity of the secondary particle 2 may be, for example, 1.00 or less, 0.95 or less, 0.90 or less, 0.80 or less, 0.70 or less, or 0.60 or less. When the degree of circularity of the secondary particle 2 is higher, for example, fillability is expected to further improve.

The average particle diameter of the secondary particle 2 may be, for example, 1 µm or more, 3 µm or more, 5 µm or more, 10 µm or more, or 15 µm or more. The average particle diameter of the secondary particle 2 may be, for example, 20 µm or less, 15 µm or less, 10 µm or less, 5 µm or less, or 3 µm or less.

The secondary particle 2 may further include an additional particle group as long as it includes the first particle group (small particles 1a) and a second particle group (large particles 1b). The number of the additional particle groups may be, for example, one or more, two or more, three or more, or four or more. The number of the additional particle groups may be, for example, five or less, four or less, three or less, or two or less. The additional particle group may have, for example, a smaller average particle diameter than the first particle group (small particles 1a). The additional particle group may have, for example, an average particle diameter larger than that of the first particle group (small particles 1a) and smaller than that of the second particle group (large particles 1b). The additional particle group may have, for example, a larger average particle diameter than the second particle group (large particles 1b). For example, when the secondary particle 2 includes three of more particle groups, a relationship such that the Mn compositional ratio of an olivine-type compound reduces as the average particle diameter of a particle group increases may be satisfied.

### Primary Particle

The primary particles 1 may have any shape. That is, the small particles 1a and the large particles 1b may independently have any shape. The small particles 1a and the large particles 1b may independently be, for example, spherical, rod-like, angular, or blocky. The degree of circularity of the small particles 1a and the degree of circularity of the large particles 1b may independently be, for example, 0.50 or more, 0.60 or more, 0.70 or more, 0.80 or more, 0.90 or more, or 0.95 or more. The degree of circularity of the small particles 1a and the degree of circularity of the large particles 1b may independently be, for example, 1.00 or less, 0.95 or less, 0.90 or less, 0.80 or less, 0.70 or less, or 0.60 or less. When the degree of circularity of the primary particles 1 is higher, for example, fillability is expected to further improve.

The average particle diameter ratio between the first particle group (small particles 1a) and the second particle group (large particles 1b) "d₂/d₁" may be, for example, 2.0 or more, 2.5 or more, 2.7 or more, 3.0 or more, 4.0 or more, 5.0 or more, 6.0 or more, 7.0 or more, 8.0 or more, 9.0 or more, or 10 or more. The average particle diameter ratio "d₂/d₁" may be, for example, 15 or less, 12 or less, 10 or less, 9.0 or less, 8.0 or less, 7.0 or less, 6.0 or less, 5.0 or less, 4.0 or less, 3.0 or less, 2.7 or less, 2.5 or less, or 2.0 or less. For example, a relationship of "1.5 ≤ d₂/d₁ ≤ 10", "3.0 ≤ d₂/d₁ ≤ 10", or "5.0 ≤ d₂/d₁ ≤ 10" may be satisfied.

The average particle diameter of the second particle group (large particles 1b) "d₂" may be, for example, 50 nm or more, 60 nm or more, 70 nm or more, 80 nm or more, 90 nm or more, 100 nm or more, 120 nm or more, 140 nm or more, 160 nm or more, 180 nm or more, 200 nm or more, 220 nm or more, 240 nm or more, 260 nm or more, 280 nm or more, 300 nm or more, 320 nm or more, 340 nm or more, 360 nm or more, 380 nm or more, or 400 nm or more. The average particle diameter "d₂" may be, for example, 1000 nm or less, 750 nm or less, 500 nm or less, 450 nm or less, 400 nm or less, 380 nm or less, 360 nm or less, 340 nm or less, 320 nm or less, 300 nm or less, 280 nm or less, 260 nm or less, 240 nm or less, 220 nm or less, 200 nm or less, 180 nm or less, 160 nm or less, 140 nm or less, 120 nm or less, 100 nm or less, 90 nm or less, 80 nm or less, 70 nm or less, or 60 nm or less. For example, a relationship of "200 nm ≤ d₂ ≤ 500 nm", "300 nm ≤ d₂ ≤ 500 nm", "200 nm ≤ d₂ ≤ 400 nm", or "200 nm ≤ d₂ ≤ 300 nm" may be satisfied.

The average particle diameter of the first particle group (small particles 1a) "d₁" may be, for example, less than 50 nm, 45 nm or less, 40 nm or less, 35 nm or less, 30 nm or less, 25 nm or less, 20 nm or less, 15 nm or less, or 10 nm or less. The average particle diameter "d₁" may be, for example, 5 nm or more, 10 nm or more, 15 nm or more, 20 nm or more, 25 nm or more, 30 nm or more, 35 nm or more, 40 nm or more, or 45 nm or more. For example, a relationship of "5 nm ≤ d₁ < 50 nm", "5 nm ≤ d₁ ≤ 45 nm", "10 nm ≤ d₁ ≤ 40 nm", or "20 nm ≤ d₁ ≤ 40 nm" may be satisfied.

The proportion of the number of the primary particles 1 (small particles 1a) belonging to the first particle group "ni" and the proportion of the number of the primary particles 1 (large particles 1b) belonging to the second particle group "n₂" may satisfy a relationship of, for example, "0.5000 < n₁/(n₁ + n₂) < 1.000". The number ratio of the small particles 1a "n₁/(n₁ + n₂)" may be, for example, 0.750 or more, 0.780 or more, 0.800 or more, 0.850 or more, 0.900 or more, 0.950 or more, 0.975 or more, 0.990 or more, or 0.995 or more. The number ratio of the small particles 1a "n₁/(n₁ + n₂)" may be, for example, 0.999 or less, 0.995 or less, 0.975 or less, 0.950 or less, 0.900 or less, 0.850 or less, 0.800 or less, 0.780 or less, or 0.750 or less. For example, a relationship of "0.700 < n₁/(n₁ + n₂) < 1.00" or "0.780 ≤ n₁/(n₁ + n₂) ≤ 0.999" may be satisfied.

The total mass of the primary particles 1 (small particles 1a) belonging to the first particle group "m₁" and the total mass of the primary particles 1 (large particles 1b) belonging to the second particle group "m₂" may satisfy a relationship of, for example, "0.1 ≤ m₁/(m₁ + m₂) ≤ 0.9". The mass ratio of the small particles 1a "m₁/(m₁ + m₂)" may be, for example, 0.2 or more, 0.3 or more, 0.4 or more, 0.5 or more, 0.6 or more, 0.7 or more, or 0.8 or more. The mass ratio of the small particles 1a "m₁/(m₁ + m₂)" may be, for example, 0.8 or less, 0.7 or less, 0.6 or less, 0.5 or less, 0.4 or less, 0.3 or less, or 0.2 or less. A relationship of, for example, "0.2 ≤ m₁/(m₁ + m₂) ≤ 0.8", "0.3 ≤ m₁/(m₁ + m₂) ≤ 0.7", or "0.4 ≤ m₁/(m₁ + m₂) ≤ 0.6" may be satisfied.

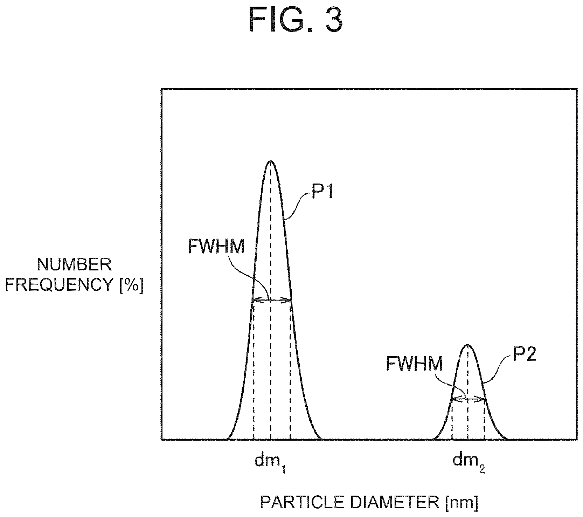

FIG. 3 shows an example of the number-based distribution of particle diameters of the primary particles. The horizontal axis and vertical axis of the histogram respectively represent a particle diameter and a number frequency. The number of peaks in the number-based distribution corresponds to the number of particle groups included in the secondary particle 2. The number-based distribution may be bimodal. That is, the number-based distribution may include at least a first peak P1 and a second peak P2.

The first peak P1 has a mode diameter "dm₁". The second peak P2 has a mode diameter "dm₂". The mode diameter "dm₂" is larger than the mode diameter "dm₁". That is, the first peak P1 is composed of the first particle group (small particles 1a). The second peak P2 is composed of the second particle group (large particles 1b). In some present embodiments, the mode diameter of each of the peaks may be regarded as the average particle diameter of each of the particle groups. In some embodiments, the integrated value (area) of each of the peaks may be regarded as the proportion of the number of the primary particles belonging to each of the peaks.

The number-based distribution may be multimodal. That is, the number-based distribution may include an additional peak in addition to the first peak P1 and the second peak P2. The additional peak may have, for example, a smaller mode diameter than the first peak P1. The additional peak may have, for example, a mode diameter larger than that of the first peak P1 and smaller than that of the second peak P2. The additional peak may have, for example, a larger mode diameter than the second peak P2. The additional peak may be, for example, a shoulder peak of the first peak P1. The additional peak may be, for example, a shoulder peak of the second peak P2.

### Composition

The primary particles contain an olivine-type compound. The olivine-type compound has a crystal structure belonging to a space group Pnma. A space group to which the crystal structure belongs can be determined by an XRD (X-Ray Diffraction) pattern. The primary particles (small particles) belonging to the first particle group contain a first olivine-type compound. The primary particles (large particles) belonging to the second particle group contain a second olivine-type compound. The second olivine-type compound has a lower Mn compositional ratio than the first olivine-type compound. The first olivine-type compound may contain, for example, at least one selected from the group consisting of LMP and LMFP. The second olivine-type compound may contain, for example, at least one selected from the group consisting of LFP and LMFP.

For example, in FE-SEM/EDX analysis of the second particle, the detected intensity "I₁" of Mn in the small particle and the detected intensity "I₂" of Mn in the large particle may satisfy a relationship of "I₂ < I₁". A detected intensity ratio "I₁/I₂" may be, for example, 1.2 or more, 1.5 or more, 1.8 or more, 2.0 or more, 2.5 or more, 3.0 or more, 3.5 or more, 4.0 or more, 4.5 or more, 5.0 or more, 6.0 or more, 7.0 or more, 8.0 or more, 9.0 or more, or 10 or more. The detected intensity ratio "I₁/I₂" may be, for example, 100 or less, 50 or less, 20 or less, 10 or less, 9.0 or less, 8.0 or less, 7.0 or less, 6.0 or less, 5.0 or less, 4.5 or less, 4.0 or less, 3.5 or less, 3.0 or less, 2.5 or less, 2.0 or less, 1.8 or less, 1.5 or less, or 1.2 or less.

The first olivine-type compound may have a composition represented by, for example, a formula (1) "LiₓMnₐFe₁₋ₐPo₄". The second olivine-type compound may have a composition represented by, for example, a formula (2) "Li_{y}Mn_{b}Fe_{1-b}PO₄".

In the formula (1) and the formula (2), "a" and "b" each represent an Mn compositional ratio. Therefore, a relationship of "b < a" is satisfied. A difference in Mn compositional ratio "a - b" may be, for example, more than 0, 0.10 or more, 0.20 or more, 0.30 or more, 0.40 or more, 0.50 or more, 0.60 or more, 0.70 or more, 0.80 or more, or 0.90 or more. The difference "a - b" may be, for example, 1.00 or less, 0.90 or less, 0.80 or less, 0.70 or less, 0.60 or less, 0.50 or less, 0.40 or less, 0.30 or less, 0.20 or less, or 0.10 or less. For example, a relationship of "0.10 ≤ a - b ≤ 0.90", "0.11 ≤ a - b ≤ 0.82", "0.33 ≤ a - b ≤ 0.82", "0.40 ≤ a - b ≤ 0.82", "0.33 ≤ a - b ≤ 0.60", "0.33 ≤ a - b ≤ 0.50", or "0.33 ≤ a - b ≤ 0.40" may be satisfied.

In the formula (1) and the formula (2), a ratio between Mn compositional ratios "a/b" may be, for example, 1.2 or more, 1.5 or more, 1.8 or more, 2.0 or more, 2.5 or more, 3.0 or more, 3.5 or more, 4.0 or more, 4.5 or more, 5.0 or more, 6.0 or more, 7.0 or more, 8.0 or more, 9.0 or more, or 10 or more. The ratio "a/b" may be, for example, 100 or less, 50 or less, 20 or less, 10 or less, 9.0 or less, 8.0 or less, 7.0 or less, 6.0 or less, 5.0 or less, 4.5 or less, 4.0 or less, 3.5 or less, 3.0 or less, 2.5 or less, 2.0 or less, 1.8 or less, 1.5 or less, or 1.2 or less.

In the formula (1), the Mn compositional ratio "a" may be, for example, more than 0.00, 0.10 or more, 0.20 or more, 0.30 or more, 0.40 or more, 0.50 or more, 0.60 or more, 0.70 or more, 0.80 or more, or 0.90 or more. The Mn compositional ratio "a" may be, for example, 1.00 or less, 0.90 or less, 0.80 or less, 0.70 or less, 0.60 or less, 0.50 or less, 0.40 or less, 0.30 or less, 0.20 or less, or 0.10 or less. For example, a relationship of "0.00 < a ≤ 1.00", "0.20 ≤ a ≤ 1.00", "0.60 ≤ a ≤ 0.90", "0.17 ≤ a ≤ 0.92", "0.24 ≤ a ≤ 0.92", "0.42 ≤ a ≤ 0.92", "0.53 ≤ a ≤ 0.92", "0.61 ≤ a ≤ 0.92", "0.75 ≤ a ≤ 0.92", or "0.82 ≤ a ≤ 0.92" may be satisfied.

In the formula (2), the Mn compositional ratio "b" may be, for example, 0.00 or more, 0.10 or more, 0.20 or more, 0.30 or more, 0.40 or more, 0.50 or more, 0.60 or more, 0.70 or more, 0.80 or more, or 0.90 or more. The Mn compositional ratio "b" may be, for example, less than 1.0, 0.90 or less, 0.80 or less, 0.70 or less, 0.60 or less, 0.50 or less, 0.40 or less, 0.30 or less, 0.20 or less, or 0.10 or less. For example, a relationship of "0.00 ≤ b < 1.00", "0.00 ≤ b 0.80", "0.10 ≤ b 0.50", "0.13 ≤ b 0.92", "0.13 ≤ b ≤ 0.82", "0.13 ≤ b ≤ 0.75", "0.13 ≤ b ≤ 0.61", "0.13 ≤ b ≤ 0.42", "0.13 ≤ b ≤ 0.24", or "0.13 ≤ b ≤ 0.21" may be satisfied.

In the formula (1), an Li compositional ratio "x" may be, for example, 0.5 or more, 0.6 or more, 0.7 or more, 0.8 or more, 0.9 or more, 1.0 or more, 1.1 or more, 1.2 or more, 1.3 or more, or 1.4 or more. The Li compositional ratio "x" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. A relationship of, for example, "0.5 ≤ x ≤ 1.5" may be satisfied.

In the formula (2), an Li compositional ratio "y" may be, for example, 0.5 or more, 0.6 or more, 0.7 or more, 0.8 or more, 0.9 or more, 1.0 or more, 1.1 or more, 1.2 or more, 1.3 or more, or 1.4 or more. The Li compositional ratio "y" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. A relationship of, for example, "0.5 ≤ y ≤ 1.5" may be satisfied.

The first olivine-type compound and the second olivine-type compound may each independently contain a dopant. The dopant refers to an element other than lithium (Li), manganese (Mn), iron (Fe), phosphorus (P), and oxygen (O). The dopant may either be substitutional or interstitial. The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

A carbon material (not shown) may cover the primary particle 1. The carbon material may cover part of the surface of the primary particle 1 or may cover the entire surface of the primary particle 1. The amount of the carbon material covering the primary particle may be different between the small particle 1a and the large particle 1b. The carbon material may be derived from, for example, sugar. The amount of the carbon material attached may be, for example, 0.1% or more, 0.5% or more, 1% or more, 2% or more, 3% or more, 4% or more, 5% or more, or 10% or more in terms of mass fraction relative to the secondary particle 2. The amount of the carbon material attached may be, for example, 20% or less, 15% or less, 10% or less, 5% or less, 4% or less, or 3% or less in terms of mass fraction relative to the secondary particle 2.

The positive electrode active material may further contain another component as long as it contains the first olivine-type compound and the second olivine-type compound. The mixing ratio (mass ratio) between the olivine-type compound and the another component may be, for example, "olivine-type compound/another component = 9/1 to 1/9", "olivine-type compound/another component = 8/2 to 2/8", "olivine-type compound/another component = 7/3 to 3/7", or "olivine-type compound/another component = 6/4 to 4/6". The positive electrode active material may be, for example, a mixture of a powder of an olivine-type compound and a powder of another component. The another component may contain, for example, at least one selected from the group consisting of Li[NiCoMn]O₂ (layered structure), Li[NiCoAl]O₂ (layered structure), LiMnO₂ (rock salt structure), and Li[NiMn]₂O₄ (spinel structure). It should be noted that [NiCoMn] or the like indicates that the sum of the compositional ratios of elements in parentheses is 1. The compositional ratios of the individual elements in parentheses are not limited as long as the sum of them is 1.

### Method for Producing Positive Electrode Active Material

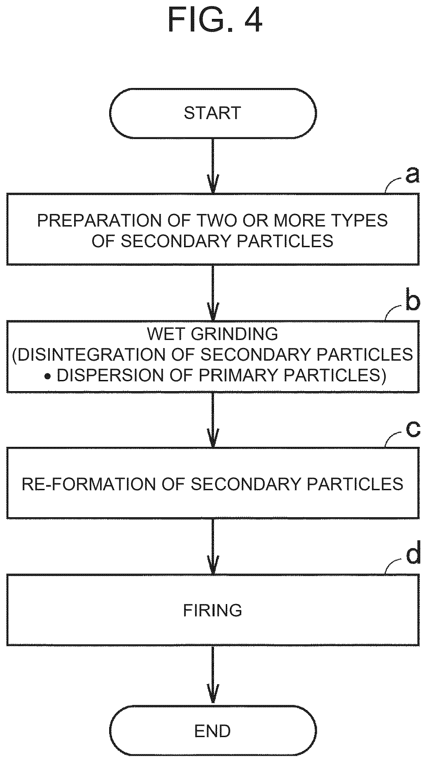

FIG. 4 is a schematic flowchart of a method for producing a positive electrode active material according to the present embodiment. Hereinbelow, the "method for producing a positive electrode active material according to the present embodiment" may be abbreviated as "present method". The present method includes "(a) preparation of two or more types of secondary particles", "(b) wet grinding", and "(c) re-formation of secondary particles". The present method may further include "(d) firing".

### (a) Preparation of Two or More Types of Secondary Particles

The present method includes preparing two or more types of secondary particles. Each of the two or more types of secondary particles contains an olivine-type compound. The two or more types of secondary particles are different from each other in their average particle diameter of primary particles and the Mn compositional ratios. The two or more types of secondary particles may be prepared independently from each other.

### (a1) Blending

For example, a lithium compound, a manganese compound, an iron compound, a phosphoric acid compound, and a dispersing medium may be mixed to form a slurry. Each of the raw materials may be weighed in such a manner that a compositional ratio (amount-of-substance ratio) represented in a formula (1) of, for example, "LiₓMnₐFe₁₋ₐPO₄" or a formula (2) of "Li_{y}Mn_{b}Fe_{1-b}PO₄"is achieved. The lithium compound may contain, for example, lithium hydroxide. The manganese compound may contain, for example, manganese carbonate. The iron compound may contain, for example, ferric phosphate. The phosphoric acid compound may contain, for example, lithium dihydrogen phosphate.

The slurry may be mixed with a carbon material. The carbon material may cover the surface of a primary particle. The carbon material may contain, for example, sugar or an organic acid. The carbon material may contain, for example, glucose, sucrose, fructose, or citric acid. The amount of the carbon material to be added may be, for example, 1% to 20% in terms of mass fraction relative to the total solid content.

The dispersing medium may contain, for example, water. The solid content concentration of the slurry may be, for example, 30% ± 20% in terms of mass fraction.

### (a2) Wet Grinding

The average particle diameter of primary particles may be adjusted by, for example, subjecting the slurry to wet grinding in a bead mill. That is, wet grinding is performed to allow the primary particles to have a desired average particle diameter. For example, wet grinding may be performed in such a manner that a D50 of about 0.30 µm is achieved.

### (a3) Granulation

Secondary particles may be formed by, for example, spray-drying the slurry. The primary particles included in the secondary particles contain a precursor of LMFP.

### (a4) Firing

The secondary particles may be subjected to heat treatment to convert the precursor to olivine-type compound. In the present method, any heat treatment furnace (e.g., an electric furnace or a muffle furnace) may be used. The atmosphere of the heat treatment may be, for example, a nitrogen atmosphere. The temperature of the heat treatment may be, for example, 400°C to 700°C. The time of the heat treatment may be, for example, 4 hours to 6 hours.

For example, two or more types of secondary particles are prepared by repeating the "(a1) Blending" to the "(a4) Firing" while changing the Mn compositional ratio in the "(a1) Blending" and changing grinding conditions in the "(a2) Wet Grinding". The two or more types of secondary particles are prepared so as to be different from each other in their average particle diameter of primary particles. The two or more types of secondary particles are prepared in such a manner that the primary particles having a larger average particle diameter have a lower Mn compositional ratio.

### (b) Wet Grinding (Disintegration of Secondary Particles, Dispersion of Primary Particles)

The present method includes disintegrating each of the two or more types of secondary particles to the scale of the primary particles by wet grinding to form a slurry in which the primary particles are dispersed. For example, the two or more types of secondary particles may be subjected to wet grinding separately from each other to form two or more slurries. Then, the slurries may be mixed. Alternatively, the two or more types of secondary particles may be subjected to wet grinding together to form one slurry. In either case, two or more types of primary particles different from each other in average particle diameter may be dispersed in each other in the slurry. The solid content concentration of the slurry may be, for example, 5% to 50% in terms of mass fraction.

The wet grinding is performed in such a manner that the secondary particles are disintegrated to the scale of the primary particles and the primary particles are dispersed. The wet grinding may be performed by, for example, a bead mill. The diameter of beads is selected based on the size of the primary particles. The time of grinding is adjusted in such a manner that the secondary particles are disintegrated to the scale of the primary particles and the primary particles are dispersed. However, the time of grinding is adjusted to be as short as possible to prevent the primary particles from being ground. For example, if the primary particles are ground so that overdispersion occurs, the difference in average particle diameter between the two or more types of primary particles may not be adjusted within a desired range.

### (c) Re-formation of Secondary Particles

The present method includes spray-drying the slurry to form secondary particles. The spray drying may be performed in the same manner as in, for example, "(a3) glanulation".

### (d) Firing

The present method may include subjecting the secondary particles to heat treatment. The heat treatment may be performed in the same manner as in, for example, "(a4) firing".

### Liquid-Based Battery

In some present embodiments, a battery may be a liquid-based battery. The "liquid-based battery" refers to a battery including an electrolytic solution. For example, a polymer battery includes an electrolytic solution and therefore belongs to liquid-based batteries. In some present embodiments, the battery has a monopolar structure. In the monopolar structure, a power-generating element may be of a wound type or a lamination type. In some present embodiments, the battery has a bipolar structure. As an example, a battery having a bipolar structure (bipolar battery) will be described.

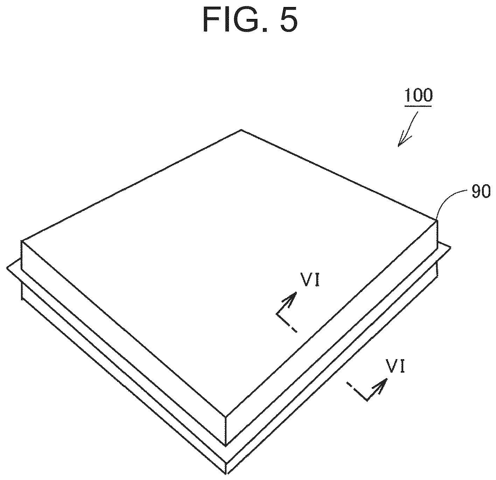

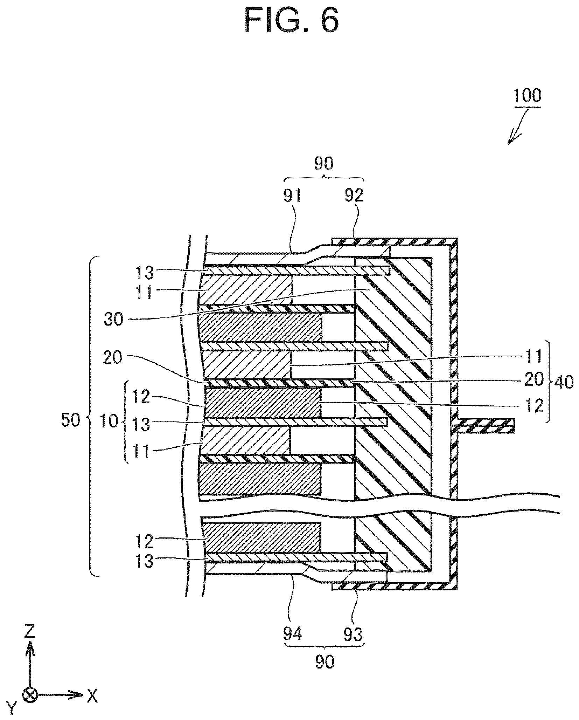

FIG. 5 is a schematic perspective view of a battery according to the present embodiment. FIG. 6 is a schematic sectional view taken along the line VI-VI shown in FIG. 5. Hereinafter, a "perpendicular direction" refers to a normal direction relative to the surface of a sheet-shaped member (e.g., a foil or an electrode). An "in-plane direction" refers to any direction orthogonal to the perpendicular direction. In the diagram of the present embodiment, a Z-axis direction corresponds to the perpendicular direction. An X-axis direction and a Y-axis direction are examples of the in-plane direction.

A battery 100 includes an exterior body 90 and a power-generating element 50. The exterior body 90 houses the power-generating element 50. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element 50 at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element 50 includes a plurality of bipolar electrodes 10. The bipolar electrodes 10 are laminated in the perpendicular direction (Z-axis direction). Each of the bipolar electrodes 10 includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around its entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element 50 includes a sealing material 30. The sealing material 30 is joined to the current collector foils 13 at its end in the in-plane direction. For example, the sealing material 30 may be thermally welded to the current collector foils 13. For example, the sealing material 30 may be disposed along the entire periphery in the in-plane direction. The sealing material 30 may contain, for example, a resin material. The sealing material 30 seals spaces between the current collector foils 13 adjacent to each other in the perpendicular direction. Cells 40 are formed by sealing the spaces between the current collector foils 13 with the sealing material 30. The cells 40 are minimum units of the power-generating element 50. The battery 100 includes the cells 40 and therefore may also be referred to as a "bipolar module". Each of the cells 40 is hermetically sealed. The cells 40 are isolated from each other. Each of the cells 40 includes the positive electrode layer 11, a separator 20, the negative electrode layer 12, and an electrolytic solution.

### Positive Electrode Layer

The positive electrode layer 11 is attached to one side of the current collector foil 13. For example, the positive electrode layer 11 may have a groove. The positive electrode layer 11 may be formed, for example, in stripes. The thickness of the positive electrode layer 11 may be, for example, 50 µm or more, 100 µm or more, 150 µm or more, 200 µm or more, 300 µm or more, 400 µm or more, 500 µm or more, 600 µm or more, 700 µm or more, 800 µm or more, or 900 µm or more. The thickness of the positive electrode layer 11 may be, for example, 1000 µm or less, 900 µm or less, 800 µm or less, 700 µm or less, 600 µm or less, 500 µm or less, 400 µm or less, 300 µm or less, or 200 µm or less.

The positive electrode layer 11 contains a positive electrode active material. That is, the battery 100 includes a positive electrode active material. The details of the positive electrode active material are as described above. The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, MoS₂, or WO₃.

### Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The thickness of the negative electrode layer 12 may be, for example, 50 µm or more, 100 µm or more, 150 µm or more, 200 µ or more, 300 µ or more, 400 µm or more, 500 µm or more, 600 µm or more, 700 µm or more, 800 µm or more, or 900 µm or more. The thickness of the negative electrode layer 12 may be, for example, 1000 µm or less, 900 µm or less, 800 µm or less, 700 µm or less, 600 µm or less, 500 µm or less, 400 µm or less, 300 µm or less, or 200 µm or less.

The negative electrode layer 12 contains a negative electrode active material. The negative electrode active material may be, for example, in a particulate or sheet form. The D50 of the negative electrode active material may be, for example, 1 µm or more, 5 µm or more, or 10 µm or more. The D50 of the negative electrode active material may be, for example, 30 µm or less, 20 µm or less, 15 µm or less, or 10 µm or less.

The negative electrode active material may contain any component. The negative electrode active material may contain, for example, at least one selected from the group consisting of a carbon-based active material, an alloy-based active material, an Si-C-composite material, Li metal, an Li-based alloy, and lithium titanate. In some present embodiments, the battery may be an Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of Al(OH)₃, AlOOH, Al₂O₃, WO₃, Li₂CO₃, LiHCO₃, and Li₃PO₄.

The alloy-based active material may contain, for example, at least one selected from the group consisting of Si, Li silicate, SiO, an Si-based alloy, tin (Sn), SnO, and an Sn-based alloy.

The SiO may have a composition represented by, for example, a general formula of "SiOₓ". In the general formula, a relationship of, for example, "0 < x < 2", "0.5 ≤ x ≤ 1.5", or "0.8 ≤ x ≤ 1.2" may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

### Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 µm or less. The average pore diameter of the resin film may be, for example, 0.01 µm to 1 µm or 0.1 µm to 0.5 µm. The "average pore diameter" can be measured by mercury intrusion porosimetry. The resin film may have a Gurley value of, for example, 50 s/100 cm³ to 250 s/100 cm³. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 µm to 50 µm or 10 µm to 25 µm.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 µm to 20 µm. The PP layer may have a thickness of, for example, 3 µm to 10 µm.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 µm to 10 µm or 1 µm to 5 µm. The inorganic particles may contain, for example, a heat-resistant material. The inorganic particle layer containing a heat-resistance material is also referred to as "HRL (Heat Resistance Layer)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 µm to 10 µm or 0.5 µm to 3 µm. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 µm to 50 µm, 0.5 µm to 20 µm, 0.5 µm to 10 µm, or 1 µm to 5 µm. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 µm to 10 µm or 0.5 µm to 3 µm.

The separator 20 may include, for example, a mixed layer. The mixed layer contains both inorganic particles and organic particles.

### Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of LiPF₆, LiBF₄, LiClO₄, LiAsF₆, LiSbF₆, LiN(SO₂F)₂ "LiFSI", LiN(SO₂CF₃)₂ "LiTFSI", LiB(C₂O₄)₂ "LiBOB", LiBF₂(C₂O₄) "LiDFOB", LiPF₂(C₂O₄)₂ "LiDFOP", LiPO₂F₂, FSO₃Li, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by a relational expression of "V_{EC} + V_{FEC} + V_{EMC} + V_{DMC} + V_{DEC} = 10". In the relational expression, "V_{Ec}, V_{FEC}, V_{EMC}, V_{DMC}, and V_{DEC}" respectively represent the volume ratios of EC, FEC, EMC, DMC, and DEC. The following relationships are satisfied: "1 ≤ V_{EC} ≤ 4", "0 ≤ V_{FEC} ≤ 3", "V_{EC} + V_{FEC} ≤ 4", "0 ≤ V_{EMC} ≤ 9", "0 ≤ V_{DMC} ≤ 9", "0 ≤ V_{DEC} ≤ 9", "6 ≤ V_{EMC} + V_{DMC} + V_{DEC} ≤ 9". For example, a relationship of "1 ≤ V_{EC} ≤ 2" or "2 ≤ V_{EC} ≤ 3" may be satisfied. For example, a relationship of "1 ≤ V_{FEC} ≤ 2" or "2 ≤ V_{FEC} ≤ 4" may be satisfied. For example, a relationship of "3 ≤ V_{EMC} ≤ 4" or "6 ≤ V_{EMC} ≤ 8" may be satisfied. For example, a relationship of "3 ≤ V_{DMC} ≤ 4" or "6 ≤ V_{DMC} ≤ 8" may be satisfied. For example, a relationship of "3 ≤ V_{DEC} ≤ 4" or "6 ≤ V_{DEC} ≤ 8" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of LiBF₄, LiFSI, LiTFSI, LiBOB, LiDFOB, LiDFOP, LiPO₂F₂, FSO₃Li, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

### ALL-Solid-State Battery

In some present embodiments, the battery may be an all-solid-state battery. The all-solid-state battery may have a bipolar structure. The all-solid-state battery includes a solid electrolyte instead of the electrolytic solution and the separator 20. The solid electrolyte may be contained also in the positive electrode layer 11 and the negative electrode layer 12. Instead of the separator 20, a solid electrolyte layer separates the negative electrode layer 12 from the positive electrode layer 11. The solid electrolyte layer contains, for example, a solid electrolyte and a binder.

The solid electrolyte may be, for example, a powder. The solid electrolyte may have a D50 of, for example, 0.1 µm or more, 0.2 µm or more, 0.3 µm or more, 0.4 µm or more, 0.5 µm or more, 0.6 µm or more, 0.7 µm or more, 0.8 µm or more, 0.9 µm or more, or 1 µm or more. The solid electrolyte may have a D50 of, for example, 5 µm or less, 4 µm or less, 3 µm or less, 2 µm or less, or 1 µm or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass ceramic (crystallized glass) phase. The crystalline phase may be of, for example, an argyrodite type or an LGPS type. The sulfide solid electrolyte contains Li and sulfur (S). The sulfide solid electrolyte may further contain any component in addition to Li and S.

The sulfide solid electrolyte may contain, for example, at least one selected from the group consisting of LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and LI₇PS₆.

For example, "LiI-LiBr-Li₃PS₄" refers to a sulfide solid electrolyte generated by mixing LiI, LiBr, and Li₃PS₄ in any amount-of-substance ratio. For example, the sulfide solid electrolyte may be generated by a mechanochemical method. A mixing ratio may be specified by placing a numeral in front of each of the raw materials. For example, "10LiI-15LiBr-75Li₃PS₄" indicates that the mixing ratio is "LiI/LiBr/Li₃PS₄ = 10/15/75 (amount-of-substance ratio)".

The sulfide solid electrolyte may have a composition represented by, for example, a general formula of "xLi₂S-(1-x)P₂S₅". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, 0.6 or less, 0.5 or less, 0.4 or less, 0.3 or less, 0.2 or less, or 0.1 or less. For example, when "x = 0.75", "xLi₂S-(1-x)P₂S₅" may have a composition of Li₃PS₄.

The sulfide solid electrolyte may have a composition represented by, for example, a general formula of "yLiI-zLiBr-(100-y-z)[xLi₂S-(1-x)P₂S₅]". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

The sulfide solid electrolyte may have a composition represented by, for example, a general formula of "Li_{7-x-2y}PS_{6-x-y}X_{y}". In the general formula, relationships of "0 < 7 - x - 2y", "0 < 6 - x - y", "0 ≤ x", and "0 ≤ y" are satisfied. "X" may contain, for example, at least one selected from the group consisting of fluorine (F), chlorine (Cl), bromine (Br), and iodine (I).

The sulfide solid electrolyte may have a composition represented by, for example, a general formula of "Li₄₋ₓM₁₋ₓPₓS₄". In the general formula, "x" may be, for example, more than 0. 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may contain, for example, at least one selected from the group consisting of Al, Zn, In, Ge, Si, Sn, Sb, Ga, and Bi.

The sulfide solid electrolyte may have a composition represented by, for example, a general formula of "Li₁₀₊ₓGe₁₊ₓP₂₋ₓS₁₂". In the general formula "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS-type crystalline phase.

The halide solid electrolyte may have a composition represented by, for example, a general formula of "Li₆₋ₙₐMₐX₆". In the general formula, "n" represents the oxidation number of "M". "M" may contain, for example, an atom having an oxidation number of +3. "M" may contain, for example, an atom having an oxidation number of +4. "M" may contain, for example, at least one selected from the group consisting of Y, Al, Ti, Zr, Ca, and Mg. For example, a relationship of "0 < a < 2" may be satisfied. "X" may contain, for example, at least one selected from the group consisting of F, Cl, Br, and I.

The halide solid electrolyte may have a composition represented by, for example, a general formula of "Li₃₋ₐTiₐAl₁₋ₐF₆". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

The halide solid electrolyte may have a composition represented by, for example, a general formula of "Li₃YClₐBr_{b}I_{6-a-b}". In the general formula, a relationship of, for example, "0 ≤ a + b ≤ 6" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

The oxide solid electrolyte may contain at least one selected from the group consisting of LiNbO₃, Li_{1.5}Al_{0.5}Ge_{1.5}(PO₄)₃, La_{2/3-x}Li₃ₓTiO₃, and Li₇La₃Zr₂O₁₂. The hydride solid electrolyte may contain, for example, LiBH₄. The nitride solid electrolyte may contain, for example, Li₃N or Li₃BN₂.

### Preparation of Samples

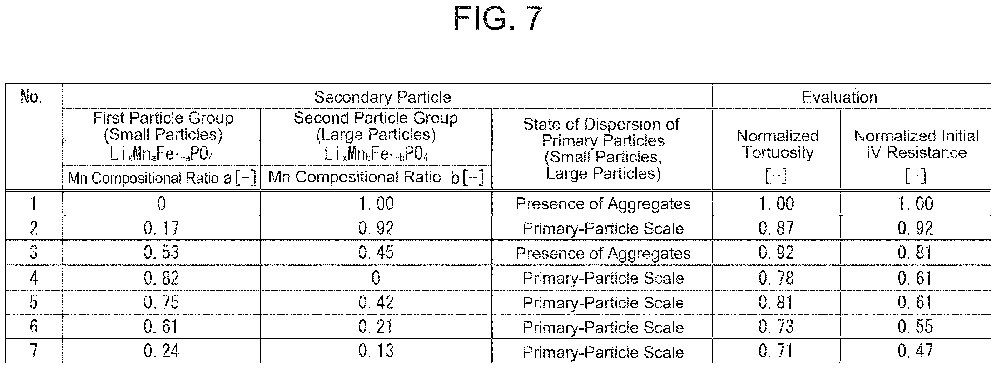

FIG. 7 is a table showing experimental results. Positive electrode active materials of No. 1 to No. 7 were produced according to the following procedure.

### (a) Preparation of Two Type of Secondary Particles

### (a1) Blending

Lithium hydroxide monohydrate, manganese carbonate, ferric phosphate, and lithium dihydrogen phosphate are weighed in such a manner that a compositional ratio shown in a formula of "LiₓMnₐFe₁₋ₐPO₄" is achieved. The Mn compositional ratio "a" of each sample is shown in FIG. 7. In the present example, "x = 1.04". Glucose is weighed in an amount of 8% in terms of mass fraction relative to the total mass of the raw materials. The weighed materials and water are mixed to form a slurry. The solid content concentration of the slurry is 30% ± 20% in terms of mass fraction.

### (a2) Wet Grinding

The slurry is subjected to wet grinding in a bead mill to adjust the average particle diameter of a dispersoid (primary particles).

### (a3) Granulation

The slurry is spray-dried by a spray drier to form secondary particles. The secondary particles contain a precursor of olivine-type compound. A target value of D50 of the secondary particles (powder) is 9 µm ± 5 µm. The settings of the spray drier are as follows.
Air inlet temperature: 250°C
Air outlet temperature: 115°C ± 15°C
Intake pressure: 2.0 MPa
Nozzle pressure of spray nozzle: 0.2 ± 0.1 MPa

### (a4) Firing

The secondary particles are placed in a firing furnace. The atmosphere in the furnace is a nitrogen atmosphere. The temperature in the furnace is increased to 200°C at a temperature increase rate of 3°C/min. The temperature in the furnace is maintained at 200°C for 1 hour. Then, the temperature in the furnace is increased to 650°C at a temperature increase rate of 5°C/min. The temperature in the furnace is maintained at 650°C for 5 hours. Then, the temperature in the furnace is decreased to 400°C at a temperature decrease rate of 2°C/min. Then, the temperature in the furnace is decreased to room temperature at a temperature decrease rate of 15°C/min. As a result, the precursor is converted to olivine-type compound.

In this way, secondary particles including a first particle group (average particle diameter "di = 45 nm", Mn compositional ratio "a") are formed. Secondary particles including a second particle group (average particle diameter "d₂ = 120 nm", Mn compositional ratio "b") are formed by changing the Mn compositional ratio in the "(al) Blending" and the average particle diameter of the primary particles in (a2) Wet Grinding".

### (b) Wet Grinding (Disintegration of Secondary Particles, Dispersion of Primary Particles)

The two types of secondary particles and water are mixed to form a slurry. The solid content concentration of the slurry is 5% to 50% in terms of mass fraction. The slurry is subjected to wet grinding in a bead mill. Grinding conditions of No. 1 and No. 3 are as follows.
Amount of slurry to be processed: 1.5 kg
Bead diameter: 2.0 mm
Grinding time: 10 min
Circumferential velocity of mill: 8 m/s

Grinding conditions of No. 2 and No. 4 to No. 7 are as follows.
Amount of slurry to be processed: 1.5 kg
Bead diameter: 3.0 mm to 0.1 mm
Grinding time: 30 min to 240 min
Circumferential velocity of mill: 8 m/s to 12 m/s

### (c) Re-formation of Secondary Particles

The slurry is spray-dried by a spray drier to form secondary particles. The settings of the spray drier are the same as those described above with reference to (a3) granulation.

### (d) Firing

The secondary particles are subjected to heat treatment. The conditions of the heat treatment are the same as those described above with reference to (a4) firing.

### Evaluations

Each of the samples was evaluated according to the following procedures.

### Production of Electrode

A positive electrode active material, an electrically-conductive material (acetylene black), and a binder (PVdF) are mixed to form a mixture. The mixing ratio (mass ratio) among them is "positive electrode active material/electrically-conductive material/binder = 92/5/3". The mixture is dispersed in a dispersing medium (N-methyl-2-pyrrolidone) to form a paste. The solid content concentration of the paste is 50% in terms of mass fraction. The paste is applied onto the surface of an Al foil and dried to form a positive electrode layer. The density of the positive electrode layer is adjusted to 1.8 g/cm³ by roll press to form a raw sheet. The raw sheet is subjected to vacuum drying at 120°C for 12 hours. After drying, an electrode (diameter: 14 mm) is punched out from the raw sheet.

### Measurement of Tortuosity

Two uncharged electrodes are prepared. The electrodes are laminated in such a manner that positive electrode layers face each other to form a laminated body. The laminated body and an electrolytic solution are housed in a coin-type case to produce a coin cell. The impedance measurement of the coin cell is performed under the following conditions.
SOC: 50%
Frequency range: 100000 to 0.01 Hz
Temperature: 25°C
Voltage amplitude "ΔV": ±5 mV

The result of the impedance measurement is analyzed by analysis software "ZView (registered mark)" to calculate a solution resistance "Rᵢₒₙ". Further, the effective conductivity of the electrolytic solution "κ^{eff}ₚₒₛ" is calculated by the following formula. ${κ}^{eff} pos = L / \left(S⋅{R}_{ion}\right)$
L: Film thickness
S: Product of area of electrode and void ratio of electrode

A porosity "ε" is calculated from the design value of the electrode. A tortuosity "τ" is calculated by the following formula. $τ = \left(K⋅ε\right) / {κ}^{eff} pos$ K: Electric conductivity of bulk electrolytic solution

The normalized tortuosity shown in FIG. 7 is a value normalized by regarding the tortuosity of No. 1 as 1.00.

### Production of Battery

A coin cell was assembled in a glove box. The configuration of the cell is as follows.
Working electrode: Electrode (Positive electrode)
Counter electrode: Li foil
Separator: Porous polymer film
Electrolytic solution: "EC/DMC = 3/7 (volume ratio)", LiPF₆ (1 mol/L)

### Measurement of Initial IV Resistance

For the coin cell, charge of from 3.0 V to 4.3 V is regarded as the state of charge (SOC) of 100%. The SOC of the coin cell is adjusted to 50%. In an environment at a temperature of 0°C, the coin cell is discharged for 10 seconds at a rate of 0.1 C. The amount of voltage drop (unit: V) after a lapse of 10 seconds from the start of discharging is measured. Similarly, the amounts of voltage drop are measured at respective rates of 0.3 C, 0.5 C, 0.7 C, and 1 C. The relationship of the amount of voltage drop to electrical current is plotted on a two-dimensional coordinate. An approximate straight line (linear function) of a point cloud is drawn. The slope of the approximate straight line is regarded as initial IV resistance. The normalized initial IV resistance shown in FIG. 7 is a value normalized by regarding the initial IV resistance of No. 1 as 1.00. It should be noted that "C" is a symbol indicating the rate of electrical current. At a rate of 1 C, a battery delivers its rated capacity in one hour.

### Results

As can be seen from FIG. 7, when a relationship of "b < a" is satisfied, the IV resistance tends to reduce. Further, when the small particles and the large particles are dispersed in each other, the IV resistance tends to significantly improve.

### Supplementary Note

The present disclosure also provides a positive electrode active material that will be described below.
A positive electrode active material including a secondary particle, wherein
the secondary particle includes primary particles,
a number-based distribution of particle diameters of the primary particles includes a first peak and a second peak,
the second peak has a larger mode diameter than the first peak,
the primary particles belonging to the first peak and the primary particles belonging to the second peak are dispersed in each other in the secondary particle,
the primary particles belonging to the first peak contain a first olivine-type compound,
the primary particles belonging to the second peak contain a second olivine-type compound, and
the second olivine-type compound has a lower Mn compositional ratio than the first olivine-type compound.

## Claims

1. A positive electrode active material comprising a secondary particle (2), wherein:
the secondary particle (2) includes a first particle group and a second particle group;
each of the first particle group and the second particle group is composed of primary particles (1);
the second particle group has a larger average particle diameter than the first particle group;
the first particle group and the second particle group are dispersed in each other in the secondary particle (2);
the primary particles (1) belonging to the first particle group contain a first olivine-type compound;
the primary particles (1) belonging to the second particle group contain a second olivine-type compound; and
the second olivine-type compound has a lower Mn compositional ratio than the first olivine-type compound.

2. The positive electrode active material according to claim 1, wherein,
in FE-SEM/EDX analysis of the secondary particle (2), a relationship of I₂ < I₁ is satisfied
where
I₁ represents a detected intensity of Mn in the primary particle (1) belonging to the first particle group, and
I₂ represents a detected intensity of Mn in the primary particle (1) belonging to the second particle group.

3. The positive electrode active material according to claim 1, wherein:
the first olivine-type compound has a composition represented by a formula 1:
LiₓMnₐFe₁₋ₐPO₄;
the second olivine-type compound has a composition represented by a formula 2:
Li_{y}Mn_{b}Fe_{1-b}PO₄;
and
in the formula 1 and the formula 2, relationships of 0.5 ≤ x ≤ 1.5, 0.00 < a ≤ 1.00, 0.5 ≤ y ≤ 1.5, and 0.00 ≤ b < 1.00 are satisfied.

4. The positive electrode active material according claim 3, wherein in the formula 1 and the formula 2, relationships of 0.20 ≤ a ≤ 1.00 and 0.00 ≤ b ≤ 0.80 are further satisfied.

5. The positive electrode active material according to claim 4, wherein in the formula 1 and the formula 2, relationships of 0.60 ≤ a ≤ 0.90 and 0.10 ≤ b ≤ 0.50 are further satisfied.

6. The positive electrode active material according to claim 3, wherein in the formula 1 and the formula 2, a relationship of 0.10 ≤ a - b ≤ 0.90 is further satisfied.

7. The positive electrode active material according to any one of claims 1 to 6, wherein, a relationship of 1.5 ≤ d₂/d₁ ≤ 10 is satisfied
where
d₁ represents an average particle diameter of the first particle group, and
d₂ represents an average particle diameter of the second particle group.

8. The positive electrode active material according to any one of claims 1 to 6, wherein, a relationship of 0.4 ≤ m₁/(m₁ + m₂) ≤ 0.6 is satisfied
where
m₁ represents a total mass of the primary particles (1) belonging to the first particle group; and
m₂ represents a total mass of the primary particles (1) belonging to the second particle group.

9. An electrode comprising a positive electrode layer (11), wherein the positive electrode layer (11) contains the positive electrode active material according to any one of claims 1 to 6.

10. A battery (100) comprising the electrode according to claim 9.

11. The battery (100) according to claim 10, wherein the battery (100) has a bipolar structure.
